# EUROPEAN PATENT SPECIFICATION

(11) **EP 0 535 142 B1**
(45) Date of publication and mention of the grant of the patent: **12.10.1994**
(21) Application number: 91912461.0
(22) Date of filing: 13.06.1991
(51) Int. Cl.: B60R 22/20

(54) **ADJUSTABLE SEAT BELT ANCHORAGE**
VERSTELLBARE SICHERHEITGURT-VERANKERUNG
ANCRAGE DE CEINTURE DE SECURITE REGLABLE

(30) Priority: 29.06.1990 US 546132
(43) Date of publication of application: 07.04.1993
(73) Proprietor: AlliedSignal Inc., Morristown, New Jersey 07962-2245 (US)
(72) Inventor: BOUMARAFI, Mohamed, Rochester Hills, MI 48309 (US); PONDELL, Carl, Sterling Heights, MI 48310 (US)
(74) Representative: W.P. THOMPSON & CO.
(86) International application number: US9104228
(87) International publication number: WO9200209

(56) References cited:
- DE-A- 2 947 391
- DE-U- 8 703 094
- FR-A- 2 564 792
- US-A- 4 971 359

## Description

### BACKGROUND AND SUMMARY OF THE INVENTION

The present invention relates to an adjustable anchorage for seat belts for the protection of vehicle occupants. The present invention finds application in what is known as a three-point seat belt system in which the seat belt and in particular the shoulder belt portion is looped through a D-ring or similar device which is often fixedly attached to the "B" pillar of a vehicle. The rigid attachment of the D-ring or anchorage to the vehicle does not provide flexibility in the operation of the seat belt system to accommodate varying sizes of the occupants. In a system employing a fixed anchorage, the anchor point is chosen to accommodate an occupant of average size. In this manner the shoulder belt is designed to contact the shoulder of the occupant and then extend diagonally across the occupant's torso to a buckle. This, however, is not the case with occupants who are taller or shorter than average. To accommodate for varying size of occupants, adjustable anchorage mechanisms have been proposed in the prior art, one of which is disclosed in DE-U-8703094, comprising the features defined in the preamble of claim 1. Another prior art device is disclosed in the commonly owned United States Patent RE 32,524. Other adjustable anchorage mechanisms can be found in United States Patent US-A-4,556,255 as well as in a variety of Great British patent applications such as GB-A-2,124,889; GB-A-2,132,071; GB-A-2,136,270 and GB-A-2,138,670.

It is an object of the present invention to provide a manually adjustable seat belt anchorage which is of simple construction and one which maintains its structural integrity and performance during high deceleration and vehicle crash situations.

Accordingly, the invention comprises: an adjustable seat belt anchorage comprising: a guide rail adapted to be secured to a portion of a vehicle generally at or above occupant shoulder height. The guide rail forms an an open channel, and includes a plurality of pairs of cut-outs oppositely positioned in a front walls of the guide rail. The anchorage further includes a latch plate assembly comprising: a resilient carrier slidingly received within the channel; a latching mechanism is biased into the guide rail by the carrier and supported by and movable within the carrier. The latching mechanism includes a latch bar extending upwardly from the carrier for engaging a selected pair of cut-outs and an attachment means such as a threaded bushing for supporting a safety belt support device such as a D-ring. The support or D-ring is adapted to receive a portion of the safety belt, wherein the point of attachment of the D-ring is located relative to the latch bar means in a manner that forces and torques exerted upon the safety belt and D-ring tend to urge the latch bars into the cut-outs in the guide rail. A spring is provided to bias the latching means upwardly. The spring includes a coiled portion slideable received within a portion of the carrier and extendable along the guide rail as the carrier is moved therealong including an attachment end secured to the guide rail proximate a mechanical first stop.

Many other objects and purposes of the invention will be clear from the following detailed description of the drawings.

### BRIEF DESCRIPTION OF THE DRAWINGS

In the drawings:
FIGURE 1 illustrates a front plan view of a guide rail and a latch plate assembly.
FIGURE 2 is a partial view of FIGURE 1 without the latch plate assembly.
FIGURE 3 illustrates a cross-sectional view taken through section 3-3 of FIGURE 1.
FIGURE 4 is a partial view of FIGURE 3 without the latch plate assembly.
FIGUREs 5-8 illustrate various views of a carrier.
FIGUREs 9 and 10 illustrate side and top views of a latch mechanism.
FIGUREs 11 and 12 illustrate front and side views of a spring.
FIGURE 13 illustrates an D-ring attached to the latch plate assembly.
FIGURE 14 illustrates a cross-sectional view taken through section 14-14 of FIGURE 2.
FIGUREs 15 and 16 illustrate various views of a spring.

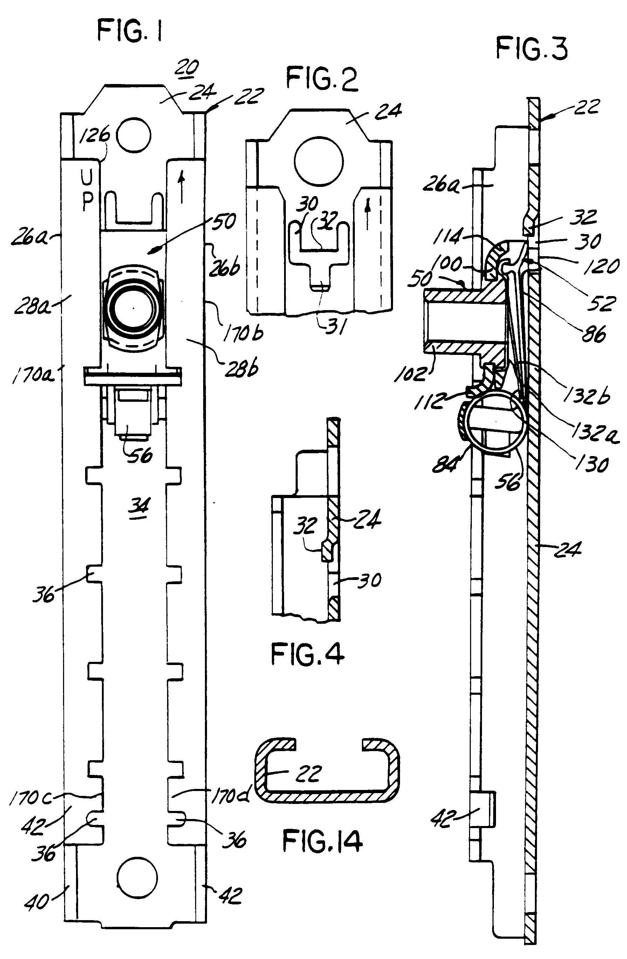

FIGURES2 17, 18 and 19 illustrate a bottom plan, cross-sectional and end view of a cover for the guide rail and latch plate assembly.

### DETAILED DESCRIPTION OF THE DRAWINGS

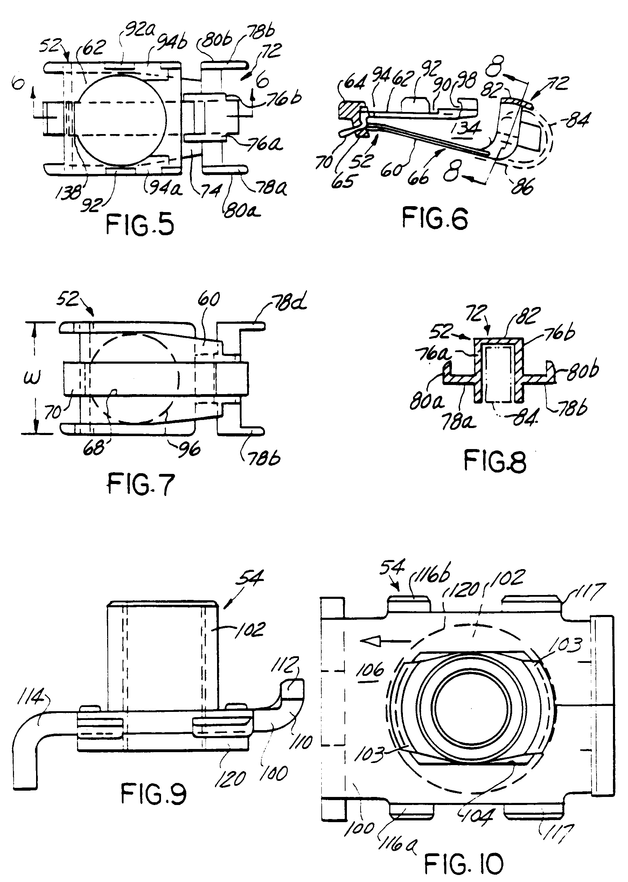

FIGUREs 1 through 4 illustrate many of the major components of an adjustable seat belt anchorage 20 in accordance with the present invention. More specifically, these figures illustrate a guide rail 22 adapted to be secured to the "B" post of a vehicle at or above shoulder height of the occupant. The guide rail includes a rear wall 24, side walls 26a and b and spaced front walls 28a and b forming a channel or groove 34. Formed in the top portion of the guide rail 22 is a Y-shaped slot 30, having a lower cut-out 31. A center tab 32 formed in the rear wall 24 extends into the channel or open groove 34 to provide a mechanical stop. The front walls 28a and b include a plurality of oppositely positioned pairs of cut-outs 36. The lower end 40 of the top walls 28 are bent over such as at 42 to provide another mechanical stop. Slideable positioned within the guide rail 22 is a latch plate assembly 50, also shown in FIGUREs 1 and 3. The latch plate assembly 50 comprises a carrier 52 (also shown in FIGUREs 5 through 8), a latching mechanism 54 (also shown in FIGUREs 9 and 10), and a return spring 56. As is evident from the drawings, the carrier 52 supports the latching mechanism 54.

In the preferred embodiment of the invention, the carrier 52 is fabricated of a resilient material having a low coefficient of friction such as an acetal copolymer. The carrier 52 comprises a lower carrier plate 60 and an upper carrier plate 62 extending from a reinforced end 64, the lower portion 65 of which slides on the rear wall 24. The width of the carrier plate w is slightly smaller than the width of the channel or open groove 34 to permit entry. The lower carrier plate 60 is flexible, and in its bottom region generally shown as 66 (see FIGURE 7), has a centrally disposed groove 68 under which is received a portion of the spring 56. A portion 70 of the lower carrier plate 60 essentially positioned in the cut-out region 66, proximate the end 64, extends axially out from the carrier 52. As will be seen from the description below, and as can be seen from FIGURE 3, this extension 70 engages the tab or stop 32 preventing the latch plate assembly 50 from sliding out from the top of the groove 34 of the guide rail 22. Extending upwardly from the lower carrier plate 60 is a spring retainer and carrier guide mechanism, generally shown as 72. This mechanism extends from the narrowed end 74 of the lower carrier plate and comprises a pair of spaced vertically extending posts 76a and b. Extending laterally from each post are radial flanges or ribs 78a and b, defining engagement surfaces 80a and b, which coact with the interior of the side walls 26a and b to prevent skewing of the carrier 52 as it slides within the channel 34. A top portion joins the posts generally shown as 82, and is arcuately shaped. A coiled portion 84 (shown in phantom line) of the spring 56 is received between the posts 76 and top 82. As shown in FIGURE 6, a flat portion 86 of the spring extends underneath the lower carrier plate in the groove 68. The spring portions 84 and 86 are shown in phantom line in those FIGUREs. As can be appreciated, the spring biased the carrier 52 upwardly.

With reference to FIGUREs 5 and 6, it can be seen that the top carrier plate 62 comprises a recess 90 formed by partial walls 92 including cut-out portions 94 to receive the latching mechanism 54. The top carrier plate 62 further includes a central opening 96, the purpose of which will be described below. Part of each wall 92 includes a recess or cut-out such as 98 for receipt of another portion of the latching mechanism 54.

With reference to FIGUREs 9 and 10, there is shown the latching mechanism 54 which comprises a latch plate 100 and bushing 102. The latch plate includes an opening 104 in a generally central flat portion 106 thereof. The bushing is inserted through the opening 104. A portion 103 of the bushing is swaged against the flat portion 106 of the latch plate 100. At one end 110 the latch plate curves upwardly forming a latch or bar 112. At the opposite end the latch plate 100 curves downwardly at 114 and includes a cut-out 116 through which is received the extending portion 70 of the carrier 52. Formed within the flat portion 106 are extending flanges 116a and b. Flanges 116a fit within the openings 94 formed within the carrier, while flanges 116b fit within similar openings 94b. Ends 117 of these flanges are also received within the cut-outs 98 formed in the carrier 52. During assembly, the latch plate 100 is fitted to the recess 90 of the upper plate 62 of the carrier such that flanges 116a fit within the spaces 94, flanges 116b fit and snap within the recess or cut-out 98 and the downwardly curved portion is secured over the end 64. In this position, the flanged portion 120 of the bushing extends into the opening 96 of the carrier.

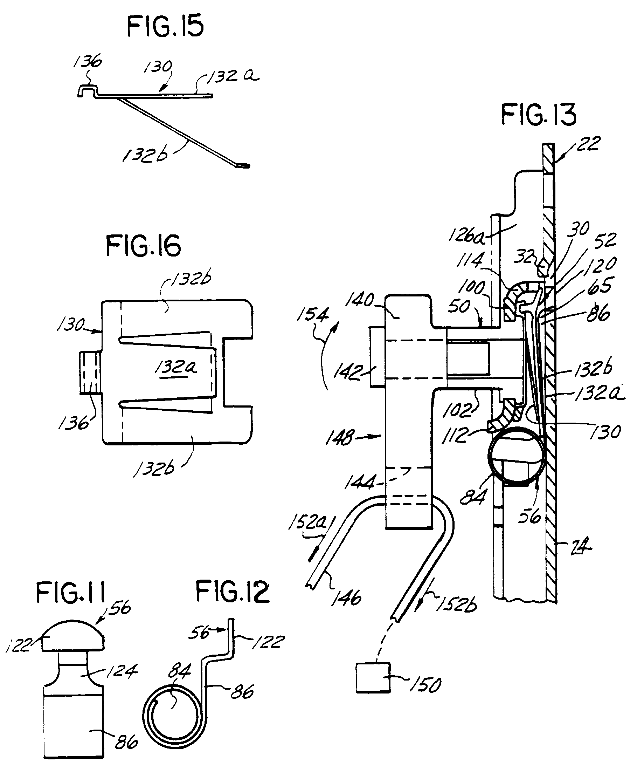

FIGUREs 11 and 12 illustrate various views of the spring 56 in its coiled configuration. The spring 56 is a coiled spring having a coiled portion 84 and an end portion 122 formed in a T shape. Below this end portion is a narrowed bent section 124. During assembly the end 122 is inserted within the narrowed section 31 of the Y-shaped groove 30 such that the wings of the T-shaped end 122 reside on the back surface of the rear wall 24 which is shown in phantom line in FIGURE 3.

Assembly of the above-described anchorage 20 is performed as follows. The spring 56 is inserted within the groove 30 in the manner described above such that the coiled portion 84 resides just below the narrowed portion of the groove 30. The latch plate assembly 50 (comprising the carrier 52 and latching mechanism 54) is slid within the top open end 126 of the guide rail 22 with the carrier guide mechanism 78 entering the guide rail first. The latch plate assembly 50 is depressed such that the bar 112 resides below the front rails 28 thereby partially entrapping the latch plate assembly 50 to the guide rail 22. Thereafter, the latch plate assembly 50 is urged downwardly into the channel 34 whereupon the spring 56 is entrapped by the retainer formed by the posts 76, and curved top portion 82. The further downward motion of the latch plate assembly 50 pushes the coiled portion 84 of the spring downward in the channel unrolling same, permitting the now unrolled or flat portion 86 of the spring to lie below the groove 68 formed on the underside of the lower carrier plate 60. As the latch plate assembly 50 is moved further down the guide rail, the latch bar 112 will be positioned just below one of the pairs of cut-outs 36 whereupon the resilient carrier urges the bar upwardly into such cut-out, locking the latch plate assembly in place.

FIGURE 2 also illustrates an alternate embodiment of the invention wherein an optional flat, bifurcated spring 130, having extending legs 132a and b is inserted within the V-shaped space 134 (see FIGURE 6) within the carrier 52 thereby providing additional resiliency in the operation of the present invention. FIGURES 15 and 16 illustrate views of the spring 130. The spring 130 also includes a hook 136 extending from the body of the spring 130. The hook 136 is received in the recess 138 and extends over a portion of the end 64 (see FIGUREs 3 or 13).

FIGURE 13 illustrates a portion of FIGURE 3. Attached to the latch plate assembly and more particularly to the bushing 102 is a D-ring 140 of known variety. As is known in the art, the D-ring is often called a turning loop. The D-ring 140 is rotationally secured to the bushing 102 by a fastener 142. The D-ring includes a loop or opening 144 for receipt of a portion of the seat belt 146. To reposition the D-ring, it is pushed inwardly (see arrow 148) thereby compressing the carrier 52, causing the latch bar 112 to move inwardly out of one of the cut-outs 36. With the latch bar 112 in this position, the occupant of the vehicle can move the D-ring up and down within the anchorage 20 such that the seat belt 146 is now able to extend across the shoulder and upper torso of the occupant in a comfortable manner. However, if only an inward force acts on the D-ring 140, the spring 56 will move the carrier to the top of the guide rail.

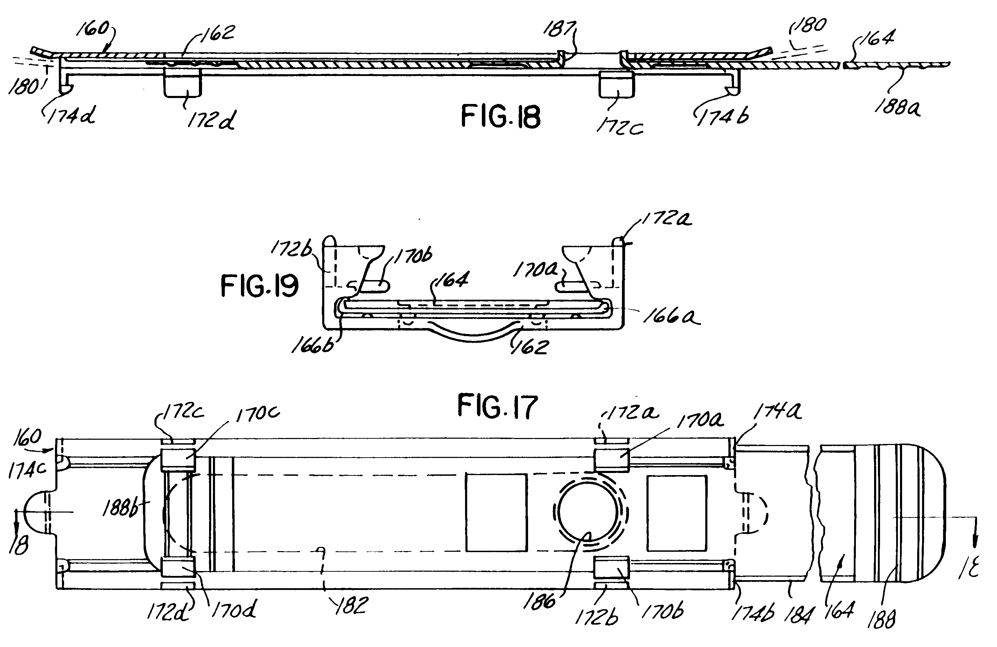

FIGUREs 17-19 show various views of a cover assembly 160 for the guide rail 22 and latch plate assembly 50. The cover assembly 160 includes a cover plate or outer cover 162 adapted to snap fit over the guide rail and a slide or inner cover 164 movable with the latch plate assembly 50. The cover plate 162 is formed with two axially extending grooves 166a,b to receive the slide 164. Locking tabs 170a-d extend inwardly proximate the groove to snap fit to the guide rail 22 at the wide top and bottom portions of the front walls 28, such as at locations 170a-d (see FIGURE 1). Extending downwardly from the cover plate 162 and a plurality of flat locating tabs 172a-d which engage the side walls 26 of the guide rail. Locking end tabs 174a-d are provided to snap fit with top and bottom portions of the guide rail 22. The ends 176a and b of the cover plate 162 are raised so that interior vehicle trim 180 (shown in phantom line) can fit therebehind, the plate 162 also includes an oblong opening 182 . The slide 164 includes an oblong body 184 having a circular boss 187 defining an opening 186 through which the bushing 102 extends. Vertical motion of the slide 164 is limited when the boss 187 contacts the opening 182. As the bushing 102 is moved in the guide rail 22, the side 164 moves therewith. The ends 188a, b are made thinner than the body 184 so that it may curve if an obstruction interior to the vehicle trim is encountered so that these ends can flex. It should be appreciated that the ends 188 are positioned behind the vehicle trim.

It should be noted that the carrier 52 shown in FIGUREs 3 and 13 is shown in its unstressed condition wherein only a portion of the bottom 66, near the spring retainer 72, and end 65 are in contact with the rear wall 24. When the bushing 102 is depressed, the flexible lower carrier plate 60 deforms against the rear wall 24 wherein a greater portion of the bottom 66 is in contact with the rear wall.

During a crash situation, the shoulder belt 146 will be prevented from extending as a retractor mechanism 150 of known variety locks. In this crash situation, the occupant will tend to move forwardly thereby tensioning the seat belt 146 in the direction of the arrows 152a and b. In this stressed condition and by virtue of the mode of attachment of the D-ring to the latch plate assembly, a torsional force (see arrow 154) is imparted to the latch plate assembly 50. By orienting the latch bar 112 below the attachment point of the D-ring 140 to the bushing 102, takes advantage of the forces and torques generated during a crash situation thereby further urging the latch bar outwardly from the guide rail 22 and further into its corresponding cut-out 36 to insure that the latch bar remains in its selected position during such emergency situations.

## Claims

1. An adjustable seat belt anchorage (20) comprising:
a guide rail (22) adapted to be secured to a portion of a vehicle (24) generally at or above occupant shoulder height, the guide rail (22) forming an open channel (34), a plurality of pairs of cut-outs (36) oppositely positioned in the front walls (28) of the guide rail;
a latch plate assembly (50) comprising:
a resilient carrier (52) slidingly received within the channel (34);
a latching mechanism (54) biased into the guide rail by the carrier (52) and supported by and movable with the carrier (52) including a latch bar means (112) extending transversly to the carrier (52) for engaging a selected pair of cut-outs (36) and an attachment means (102) for supporting a D-ring (140), and a spring (56) to upwardly bias the latch plate assembly
characterized in that: the latch bar means (112) is positioned below the attachment point of the D-ring (140) relative to the latching mechanism (54) such that forces and torques exerted on the safety belt and the D-ring (140) which tend to urge the D-ring outwardly from the guide rail operate to urge the latch bar means (112) into the selected pair of cut-outs, the spring (56) comprising a coiled end (84) coiled transversly out from the guide rail and the coil slideably received within a portion of the carrier (52) and extendable along the guide rail (22) as the carrier is moved therealong including an attachment end (122) secured to the guide rail proximate a first stop (32) formed therein.

2. The anchorage (20) as defined in Claim 1 wherein the carrier (52) comprises: a lower carrier plate (60) and upper carrier plate (62) oriented to permit relative motion therebetween, the lower carrier plate (60) includes, at a lower end thereof, first means (72) for retaining the coiled portion (84) of the spring (56) and second means (78) for stabilizing the carrier (52) relative to the channel (34), a groove or slot (68) located in a lower surface (66) of the lower carrier plate (60) below which is located an extended portion (86) of the spring (56) and a tab (70) extending from the lower carrier plate (60) opposite the first means, for engaging the first stop (32).

3. The anchorage (20) as defined in Claim 2 wherein the first means (72) includes a pair of vertically extending posts (76) and an arcuately shaped top portion (82) into which is received the coiled portion (84) of the spring (56).

4. The anchorage (20) as defined in Claim 2 wherein the second means includes a pair of lateral extending ribs (78) each defining an engagement surface (80) for engaging side walls (26) of the guide rail (22).

5. The anchorage as defined in Claim 1 wherein the lower carrier plate (60) and upper carrier plate (62) are of unitary construction and are hinged mounted at a reinforced end (64) and wherein a bifurcated spring (130) located between the upper and lower carrier plates to supplement the resiliency thereof.

6. The anchorage (20) as defined in Claim 2 wherein a rear wall (24) of the guide rail (22) includes a Y-shaped opening, a portion of the guide rail (22) proximate the Y-shaped opening is raised upwardly to form the first stop (32), and wherein one end (122) of the spring (56) is received within the Y-shaped opening.

7. The anchorage (20) as defined in Claim 1 wherein the attachment means (102) is located above the latch bar means (112).

8. The anchorage (20) as defined in Claim 1 including a cover assembly (160) comprising a cover plate (162) fitted to the guide rail (22) having an elongated opening (182) therein, an inner cover or slide (164) fitted about the attachment means (106), which extends through the opening (182), and movable therewith, the inner cover or slide (164) slideable mounted to the cover plate (162).

9. The anchorage (20) as defined in Claim 1 wherein the ends (188) of the inner cover or slide (164) are adapted to be positioned behind interior trim portions (180) and are flexible.

## Patentansprüche

1. Einstellbare Sitzgurtverankerung (20), umfassend:
eine Führungsschiene (22), die an einem Teil eines Fahrzeuges (24) allgemein auf oder über Schulterhöhe eines Insassen befestigt werden kann, wobei die Führungsschiene (22) einen offenen Kanal (34) und eine Mehrzahl von Paaren von Ausschnitten (36) bildet, die in den Vorderwänden (28) der Führungsschiene gegenüberliegend positioniert sind;
ein Riegelplattengebilde (50) umfassend:
einen federnden Träger (52), der in dem Kanal (34) gleitend aufgenommen ist;
einen Verriegelungsmechanismus (54), der von dem Träger (52) in die Führungsschiene vorgespannt, von dem Träger (52) abgestützt und mit diesem bewegbar ist und eine Riegelstangeneinrichtung (112), die sich quer zu dem Träger (52) erstreckt für Eingriff mit einem ausgewählten Paar von Ausschnitten (36) und eine Anbringungseinrichtung (102) zum Abstützen eines D-Ringes (140), und, eine Feder (56) umfaßt, um das Riegelplattengebilde nach oben vorzuspannen,
dadurch gekennzeichnet, daß die Riegelstangeneinrichtung (112) unter dem Anbringungspunkt des D-Ringes (140) relativ zu dem Verriegelungsmechanismus (54) derart angeordnet ist, daß die auf den Sicherheitsgurt und den D-Ring (140) ausgeübte Kräfte und Drehmomente, welche das Bestreben haben, den D-Ring von der Führungsschiene nach außen zu drücken, dahingehend wirken, die Riegelstangeneinrichtung (112) in das ausgewählte Paar von Ausschnitten zu drücken, die Feder (56) ein aufgerolltes Ende (84) aufweist, das aus der Führungsschiene heraus quer gewickelt ist, wobei die Spule in einem Teil des Trägers (52) gleitbar aufgenommen ist und sich entlang der Führungsschiene (22) erstrecken kann, wenn der Träger entlang von dieser bewegt wird, ein Anbringungsende (122) umfaßt, welches an der Führungsschiene nahe einem ersten Anschlag (32) befestigt ist, der darin gebildet ist.

2. Verankerung (20) nach Anspruch 1, wobei der Träger (52) aufweist: eine untere Trägerplatte (60) und eine obere Trägerplatte (62), die so ausgerichtet sind, daß relative Bewegung dazwischen ermöglicht ist, wobei die untere Trägerplatte (60) an ihrem unteren Ende eine erste Einrichtung (72) zum Halten des aufgerollten Teiles (84) der Feder (56), und eine zweite Einrichtung (78) umfaßt zum Stabilisieren des Trägers (52) relativ zu der Kanal (34), eine Nut oder ein Schlitz (68) in einer unteren Fläche (66) der unteren Trägerplatte (60) angeordnet ist, unter welcher bzw. unter welchem ein verlängerter Teil (86) der Feder (56) angeordnet ist, und eine Zunge (70) sich von der unteren Trägerplatte (60) der ersten Einrichtung gegenüberliegend erstreckt für Eingriff mit dem ersten Anschlag (32).

3. Verankerung (20) nach Anspruch 2, wobei die erste Einrichtung (72) ein Paar von sich vertikal erstreckenden Stützen (76) und einen bogenförmig gestalteten oberen Teil (82) umfaßt, in welchem der aufgerollte Teil (84) der Feder (56) aufgenommen ist.

4. Verankerung (20) nach Anspruch 2, wobei die zweite Einrichtung ein Paar von sich seitlich erstreckenden Rippen (78) umfaßt, deren Jede eine Eingriffsfläche (80) bestimmt für Eingriff mit Seitenwänden (26) der Führungsschiene (22).

5. Verankerung nach Anspruch 1, wobei die untere Trägerplatte (60) und die obere Trägerplatte (62) von einheitlicher Ausführung und an einem verstärkten Ende (64) angelenkt bzw. scharnierartig angebracht sind, und wobei eine gegabelte Feder (130) zwischen der oberen und der unteren Trägerplatte angeordnet ist, um deren Federungsvermögen zu unterstützen bzw. zu ergänzen.

6. Verankerung (20) nach Anspruch 2, wobei eine hintere Wand (24) der Führungsschiene (22) eine Y-förmige Öffnung umfaßt, ein Teil der Führungsschiene (22) nahe der Y-förmigen Öffnung nach oben erhöht ist, um den ersten Anschlag (32) zu bilden, und wobei ein Ende (122) der Feder (56) in der Y-förmigen Öffnung aufgenommen ist.

7. Verankerung (20) nach Anspruch 1, wobei die Anbringungseinrichtung (102) über der Riegelstangeneinrichtung (112) angeordnet ist.

8. Verankerung (20) nach Anspruch 1, umfassend ein Abdeckgebilde (160), welches eine Abdeckplatte (162) aufweist, die an die Führungsschiene (22) angepaßt bzw. an ihr angeordnet ist und eine langgestreckte Öffnung (182) enthält, und eine innere Abdeckung bzw. ein Gleitstück (164), das um die Anbringungseinrichtung (106) angebracht oder angepaßt ist, sich durch die Öffnung (182) erstreckt und damit bewegbar ist, wobei die innere Abdeckung bzw. das Gleitstück (164) an der Abdeckplatte (162) gleitbar angebracht ist.

9. Verankerung (20) nach Anspruch 1, wobei die Enden (188) der inneren Abdeckung bzw. des Gleitstücks (164) hinter inneren Trimm- oder Einfassungsteilen (180) angeordnet werden können und biegsam sind.

## Revendications

1. Ancrage de ceinture de sécurité réglable (20) comprenant:
un rail de guidage (22) adapté de manière à être fixé à une partie d'un véhicule (24), généralement à la hauteur de l'épaule de l'occupant ou au-dessus de celle-ci, le rail de guidage (22) formant un profilé en U ouvert (34), plusieurs paires d'entailles (36) étant situées en opposition dans les parois frontales (28) du rail de guidage;
une plaque d'attache (50) comprenant :
un support élastique (52) coulissant dans le profilé en U (34) ;
un mécanisme d'attache (54) poussé dans le rail de guidage par le support (52), soutenu par le support (52) et déplaçable avec celui-ci, avec un dispositif à barres d'attache (112), s'étendant transversalement par rapport au support (52) pour engager une paire sélectionnée d'entailles (36), et un dispositif de fixation (102) pour soutenir un anneau en D (140), ainsi qu'un ressort (56) pour pousser la plaque d'attache vers le haut
caractérisé en ce que le dispositif à barre d'attache (112) est placé en dessous du point de fixation de l'anneau en D (140) par rapport au mécanisme d'attache (54) de manière telle que les forces et les couples exercés sur la ceinture de sécurité et l'anneau en D (140), qui ont tendance à faire sortir l'anneau en D du rail de guidage, agissent pour pousser le dispositif à barre d'attache (112) dans la paire d'entailles sélectionnée, le ressort (56) comprenant une extrémité enroulée (84) sortant transversalement du rail de guidage, l'enroulement coulissant dans une portion du support (52) et étant extensible le long du rail de guidage (22) lorsque le support est déplacé le long de ce dernier, avec une extrémité de fixation (122) fixée au rail de guidage à proximité d'un premier arrêt (32) formé dans le dit rail.

2. Ancrage (20) tel que défini dans la revendication 1, dans lequel le support (52) comprend les éléments suivants: une plaque support inférieure (60) et une plaque support supérieure (62), orientées de manière à autoriser un mouvement relatif entre elles, la plaque support inférieure (60) comprenant, à une de ses extrémités inférieures, un premier moyen (72) pour retenir la portion enroulée (84) du ressort (56) et un second moyen (78) pour stabiliser le support (52), par rapport au profilé (34) une rainure ou encoche (68) prévue dans une surface inférieure (66) de la plaque support inférieure (60), sous laquelle on trouve une portion allongée (86) du ressort (56) et une patte (70) s'étendant à partir de la plaque support inférieur (60) à l'appui du premier moyen, pour venir en engagement avec le premier arrêt (32).

3. Ancrage (20) tel que défini dans la revendication 2 dans lequel le premier moyen (72) comprend une paire de montants (76) s'étendant verticalement et une portion supérieure incurvée (82) accueillant la portion enroulée (84) du ressort (56).

4. Ancrage (20) tel que défini dans la revendication 2, dans lequel le second moyen comporte une paire de nervures s'étendant latéralement (78) dont chacune définit une surface d'engagement (80) destiné à venir en engagement avec les parois latérales (26) du rail de guidage (22).

5. Ancrage tel que défini dans la revendication 1, dans lequel la plaque support inférieure (60) et la plaque support supérieure (62) sont de construction unitaire et sont montées à articulation au niveau d'une extrémité renforcée (64), et dans lequel un ressort bifurqué (130) est placé entre les plaques support inférieure et supérieure de manière à en augmenter l'élasticité.

6. Ancrage (20) tel que défini dans la revendication 1, dans lequel une paroi arrière (24) du rail de guidage (22) présente une ouverture en Y, une portion du rail de guidage (22) proche de l'ouverture en Y est soulevée de manière à constituer le premier arrêt (32), et dans lequel une extrémité (122) du ressort (56) est logée dans l'ouverture en Y.

7. Ancrage (20) tel que défini dans la revendication 1, dans lequel le dispositif de fixation (102) est disposé au dessus du dispositif à barre d'attache (112).

8. Ancrage (20) tel que défini dans la revendication 1, comprenant un ensemble de recouvrement (160) constitué d'une plaque de couverture (160) fixée au rail de guidage (22), avec une ouverture allongée (182), un recouvrement intérieur ou coulisse (164) fixé sur le dispositif de fixation (106) qui passe à travers de l'ouverture (182), et, déplaçable avec celui-ci, le recouvrement intérieur ou la coulisse (164) étant monté sur la plaque de couverture (162) de manière à coulisser.

9. Ancrage (20) tel que défini dans la revendication 1, dans lequel les extrémités (188) du recouvrement intérieur ou de coulisse (164) sont adaptés de manière à être placés derrière des portions de garniture intérieure (180), et sont flexibles.
